Europäisches Patentamt

European Patent Office

Office européen des brevets

(11) Publication number: **0 189 243**
A2

# EUROPEAN PATENT APPLICATION

(21) Application number: 86300052.7

(51) Int. Cl.⁴: **C 10 G 45/64, B 01 J 29/04**

(22) Date of filing: 07.01.86

(30) Priority: 22.01.85 US 693445

(43) Date of publication of application: 30.07.86
Bulletin 86/31

(84) Designated Contracting States: BE DE FR GB IT NL SE

(71) Applicant: MOBIL OIL CORPORATION, 150 East 42nd Street, New York New York 10017 (US)

(72) Inventor: Kirker, Garry Wayne, 18 Old Mill Road, Sewell New Jersey (US)
Inventor: Landis, Michael Eugene, 26 N. Horace Street, Woodbury New Jersey 08096 (US)
Inventor: Yen, Jeffrey Hsing-Gan, R.D. No. 1 Box 218C Henderickson Mill Road, Swedesboro New Jersey 08085 (US)
Inventor: Miale, Joseph Nicholas, 25 Merritt Drive, Lawrenceville New Jersey 06648 (US)
Inventor: Chang, Clarence Dayton, 11 Murray Place, Princeton New Jersey 08540 (US)

(74) Representative: West, Alan Harry, Mobil Court 3 Clements Inn, London WC2A 2EB (GB)

(54) A catalytic dewaxing process and a catalyst composition for use in the same.

(57) A process for dewaxing a hydrocarbon feedstock, particularly a lube stock, comprises contacting the feedstock under dewaxing conditions with a catalyst composition comprising (i) a catalytically active porous crystalline aluminosilicate, particularly a zeolite having a silica to alumina mole ratio of at least 12 and a Constraint Index of 1 to 12 and (ii) a crystalline aluminum phosphate.

A CATALYTIC DEWAXING PROCESS AND
A CATALYST COMPOSITION FOR USE IN THE SAME

This invention relates to a catalyst dewaxing process and a catalyst composition for use in the same.

Catalytic dewaxing of hydrocarbon oils to reduce the temperature at which separation of waxy hydrocarbons occurs is a known process. See, for example, The Oil and Gas Journal dated Jan. 6, 1975, at pages 69-73. See also U.S. Pat. No. 3,668,113 and U.S. Pat. No. 3,894,938 which describe dewaxing followed by hydrofinishing.

U.S. Pat. No. Re. 28,398 describes a process for catalytic dewaxing with a catalyst comprising a zeolite of the ZSM-5 type. A hydrogenation/dehydrogenation component may be present.

A further process for hydrodewaxing a gas oil with a ZSM-5 type catalyst is described in U.S. Pat. No. 3,956,102.

It is also known to use a mordenite catalyst containing a Group VI or a Group VIII metal to produce a low V.I. distillate from a waxy crude, as described in U.S. Pat. No. 4,110,056.

Other patents which describe various catalytic dewaxing processes include U.S. Pat Nos. 3,755,138; 4,053,532; 4,247,388; 4,474,618; and 4,486,296.

Catalytic dewaxing may be employed to dewax a variety of distillate feedstocks such as gas oils, coker bottoms, reduced crudes, recycle oils and FCC bottoms. Catalytic dewaxing may also be employed to dewax various lube stocks.

Refining suitable petroleum crude oils to obtain a variety of lubricating oils which function effectively in diverse environments has become a highly developed and complex art. Although the broad principles involved in refining are qualitatively understood, the art is encumbered by quantitative uncertainties which require considerable resort to empiricism in practical refining. Underlying these quantitative uncertainties is the complexity of the molecular constitution of lubricating oils. Becauselubricating oils for the most part are based on petroleum fractions boiling above about 230°C (450°F), the molecular weight of the hydrocarbon constituents is high and these constituents display almost all conceivable structure types. This complexity and its consequences are referred to in well-known treatises, such as, for example, in "Petroleum Refinery Engineering", by W. L. Nelson, McGraw Hill Book Company, Inc., New York, N.Y., 1958 (Fourth Edition).

In general, the basic premise in lubricant refining is that a suitable crude oil, as shown by experience or by assay, contains a quantity of lubricant stock having a predetermined set of properties such as, for example, appropriate viscosity, oxidation stability, and maintenance of fluidity at low temperatures. The process of refining to isolate that lubricant stock consists of a set of subtractive unit operations which removes the unwanted components. The most important of these unit operations include distillation, solvent refining, and dewaxing, which basically are physical separation processes in the sense that if all the separated fractions were recombined one would reconstitute the crude oil.

A refined lubricant stock may be used as such as a lubricant, or it may be blended with another refined lubricant stock having different properties. Or, the refined lubricant stock prior to use as a lubricant, may be compounded with one or more additives which function, for example, as antioxidants, extreme pressure additives, and V.I. improvers.

For the preparation of a high grade distillate lubricating oil stock, the current practice is to vacuum distill an atmospheric tower residuum from an appropriate crude oil as the first step. This step provides one or more raw stocks within the boiling range of 230 to 566°C (450 to 1050°F). After preparation of a raw stock of suitable boiling range, it is extracted with a solvent, e.g., furfural, phenol, sulfolane, or chlorex, which is selective for aromatic hydrocarbons, and which removes undesirable components. The raffinate from solvent refining is then dewaxed.

If the resulting lube stock is not dewaxed catalytically, it is generally dewaxed by admixing with a solvent such as a blend of methyl ethyl ketone and toluene. The mixture is chilled to induce crystallization of the paraffin waxes which are then separated from the raffinate. Sufficient quantities of wax are removed to provide the desired pour point for the raffinate.

The present invention provides in one aspect an advantageous process and catalyst composition for a catalytically dewaxing a lubricating oil stock.

Accordingly, the invention resides in one aspect in a process for dewaxing a hydrocarbon feedstock, said process comprising contacting said feedstock under dewaxing conditions with a catalyst composition comprising (i) a catalytically active porous crystalline aluminosilicate and (ii) a crystalline aluminum phosphate.

In a further aspect, the invention resides in a catalyst composition for use in the process of said one aspect of the invention comprising (i) a catalytically active porous crystalline aluminosilicate zeolite having a Constraint Index of 1 to 12 and a silica to alumina mole ratio of at least 12 and (ii) a crystalline aluminum phosphate.

The aluminosilicates useful herein are zeolites having an effective pore size such as to freely sorb normal hexane. In addition, the structure may provide constrained access to larger molecules. It is sometimes possible to judge from a known crystal structure whether such constrained access exists. For example, if the only pore windows in a crystal are formed by 8-membered rings of silicon and aluminum atoms, then access by molecules of larger cross-section than normal hexane is excluded. Windows of at least 10-membered rings are preferred, although in some instances excessive puckering of the rings or pore blockage may render these zeolites ineffective.

0189243

.Although 12-membered rings in theory would not offer sufficient constraint to produce certain advantageous conversions, it is noted that the puckered 12-ring structure of TMA offretite does show some constrained access. Other 12-ring structures may exist which may be operative for other reasons and, therefore, it is not the present intention to entirely judge the usefulness of a particular zeolite solely from theoretical structural considerations.

Rather than attempt to judge from crystal structure whether or not a zeolite possesses a constrained access to molecules of larger cross-section than normal paraffins, a simple determination of the "Constraint Index" may be made as described in, for example, U.S. Patent No. 4016218, Zeolites suitable for use in the present invention have a Constraint Index of less than 12, preferably 1 to 12. Constraint Index (CI) values for some typical zeolites are:

|                          | C.I. |
|--------------------------|------|
| ZSM-4                    | 0.5  |
| ZSM-5                    | 8.3  |
| ZSM-11                   | 8.7  |
| ZSM-12                   | 2    |
| ZSM-23                   | 9.1  |
| ZSM-35                   | 4.5  |
| ZSM-38                   | 2    |
| ZSM-48                   | 3.4  |
| TMA Offretite            | 3.7  |
| Clinoptilolite           | 3.4  |
| Beta                     | 1.5  |
| H-Zeolon (mordenite)     | 0.4  |
| REY                      | 0.4  |
| Amorphous Silica-Alumina | 0.6  |
| Erionite                 | 38   |

Preferred zeolites include zeolite beta, ZSM-5, ZSM-11, ZSM-12, ZSM-23, ZSM-35, ZSM-38, and ZSM-48, with ZSM-5 being especially preferred. ZSM-5 is described in U.S. Patents No. 3,702,886 and Re 29,948. ZSM-11 is described in U.S. Patent No. 3,709,979. ZSM-12 is described in U.S. Patent No. 3,832,449. ZSM-23 is described in U.S. Patent No. 4,076,842. ZSM-35 is described in U.S. Patent No. 4,016,245. ZSM-38 is more particularly described in U.S. Patent No. 4,046,859. ZSM-48 is described in U.S. Patent No. 4,397,827. Zeolite beta is described in U.S. Patent No. 3308069 and Reissue No. 28341.

It is to be understood that by referring to the foregoing patents to describe examples of specific zeolites with greater particularity, it is intended that identification of the disclosed crystalline zeolites be resolved on the basis of their respective X-ray diffraction patterns given in the patents.

Other zeolites suitable for use herein include mordenite, dealuminized Y, and REY (i.e., rare earth exchanged Y).

Zeolites when prepared in the presence of organic cations, are substantially catalytically inactive, possibly because the intra-crystalline free space is occupied by organic cations from the forming solution. They may, however, be activated by conversion to the hydrogen form by heating to remove the organic material, for example in an inert atmosphere at 540°C for one hour, followed by base exchange with an ammonium salt and then calcination at, for example, 540°C in air.

Natural zeolites may sometimes be converted to zeolite structures suitable for use herein by various activation procedures and other treatments such as base exchange, steaming, alumina extraction and calcination, alone or in combinations. Natural minerals which may be so treated include ferrierite, brewsterite, stilbite, dachiardite, epistilbite, heulandite, and clinoptilolite.

Preferably, the aluminosilicate zeolites used herein have a silica to alumina ratio of at least 12, i.e., from 12 to 500.

The aluminum phosphate used herein preferably has a microporous framework structure in which the pores are uniform and have a nominal diameter in the range of 3 to 10 Angstrom so that the intracrystalline absorption capacity of the structure for water at 4.6 torr and 24°C is at least 3.5% by weight, with the absorption and desorption of water being completely reversible and with the aluminum phosphate retaining the same framework topology in both the hydrated and dehydrated states.

Examples of aluminum phosphates useful herein are given in U.S. Patent 4,310,440 and include $AlPO_4$-5, $AlPO_4$-8, $AlPO_4$-9, $AlPO_4$-11, $AlPO_4$-12, $AlPO_4$-14, $AlPO_4$-16, $AlPO_4$-17, $AlPO_4$-18, $AlPO_4$-20, $AlPO_4$-21, $AlPO_4$-22, $AlPO_4$-23, $AlPO_4$-25, $AlPO_4$-26, $AlPO_4$-28 and $AlPO_4$-31.

The aluminum phosphate component may be essentially catalytically inactive. Surprisingly, however, when used in sufficient amounts, the aluminum phosphate component may enhance the catalyst lifetime and activity of the zeolite. The zeolite may constitute from about 5 to about 95 weight percent of the total weight of the zeolite plus the aluminum phosphate.

The aluminum phosphate component may act as a binder for the zeolite component. Optionally, however, separate binder or matrix materials may be used.

Useful matrix materials include both synthetic and naturally occurring substances, as well as inorganic materials such as clay, silica and/or metal oxides. The latter may be either naturally occurring or in the form of gelatinous precipitates or gels including mixtures of silica and metal oxides. Naturally occurring clays which can be composited with the zeolite and aluminum phosphate include those of the montmorillonite and kaolin families, which families include the sub-bentonites and the kaolins commonly known as Dixie, McNamee-Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the zeolites and aluminum phosphates employed herein may be composited with a porous matrix material, such as alumina, silica-alumina, silica-magnesia, silica-zirconia, silica-thoria, silica-beryllia, and silica-titania, as well as ternary compositions, such as silica-alumina-thoria, silica-alumina-zirconia, silica-alumina-magnesia and silica-magnesia-zirconia. The matrix may be in the form of a cogel. The relative proportions of zeolite and aluminum phosphate components and inorganic oxide gel matrix, on an anhydrous basis, may vary widely with the zeolite and aluminum phosphate content ranging from between 1 to 99 percent by weight and more usually in the range of 5 to 80 percent by weight of the dry composite.

The catalyst composition may also include a hydrogenation/dehydrogenation component as is well known in the art. More particularly, such a component can be a metal, oxide, or sulfide from Group VI-B of the Periodic Table including chromium, molybdenum and tungsten; Group II-B including zinc and cadmium; Group VII-B including manganese and rhenium and Group VIII including cobalt, nickel, platinum, palladium, ruthenium and rhodium or a combination of a metal, sulfide or oxide of Groups VI-B and VIII, such as nickel-tungsten-sulfide and cobalt oxide-molybdenum oxide.

The hydrogenation component may be incorporated into the catalyst by ion exchange with, or impregnation on, the zeolite portion thereof. For example, the zeolite containing catalyst may be modified with a Group VIII metal by soaking it in a solution, usually aqueous, of a suitable compound containing the desired Group VIII metal. Suitable compounds include metal chlorides, nitrates, acetates, and ammine complexes.

When the dewaxing process of the present invention is distillate dewaxing the feedstock may comprise a heavy hydrocarbon oil such as a gas oil, coker tower bottoms fraction reduced crude, vacuum tower bottoms, deasphalted vacuum resids, FCC tower bottoms and cycle oils. Oils derived from coal, shale or tar sands may also be treated in this way. Oils of this kind generally boil above 343°C (650°F) although the process is also useful with oils which have initial boiling points as low as 260°C (500°F). These heavy oils comprise high molecular weight long chain paraffins and high molecular weight aromatics with a large proportion of fused ring aromatics. Typical boiling ranges will be 343° to 566°C (650° to 1050°F) or 343° to 510°C (650°F to 950°F) but oils with a narrower boiling range may, of course, be processed.

The present distillate dewaxing process is of particular utility with highly paraffinic feeds because, with feeds of this kind, the greatest improvement in pour point may be obtained. However, most feeds will contain a certain content of polycyclic aromatics.

The distillate dewaxing processing is carried out under conditions similar to those used for conventional hydrocracking although the use of a highly siliceous zeolite catalyst permits the total pressure requirements to be reduced. Process temperatures of 230° to 500°C (450 to 930°F) may conveniently be used although temperatures above 427°C (800°F) will normally not be employed as the thermodynamics of the hydrocracking reactions become unfavorable at temperatures above this point. Generally, temperatures of 299 to 427°C (570°F to 800°F) will be employed. Total pressure is usually in the range of 790 to 20790 kPa (100 to 3000 psig) although higher pressures within this range, namely over 7000 kpa (1000 psig), will normally be preferred. When the process is operated in the presence of hydrogen, the hydrogen partial pressures will normally be 15960 kPa (2300 psig) or less. The ratio of hydrogen to the hydrocarbon feedstock (hydrogen circulation rate) will normally be from 178 to 3560 $Nm^3/m^3$ (100 to 20,000 SCF/bbl). The space velocity of the feedstock will normally be from 0.1 to 20 LHSV, preferably 0.1 to 10 LHSV. At low conversions, the n-paraffins in the feedstock will be converted in preference to the iso-paraffins but at higher conversions under more severe conditions the iso-paraffins can also be converted. The product is low in fractions boiling below 149°C (300°F) and in most cases the product will have a boiling range of 149 to 343°C (300° to 650°F).

The conversion may be conducted by contacting the feedstock with a fixed stationary bed of catalyst, a fixed fluidized bed or with a transport bed. A simple configuration is a trickle-bed operation in which the feed is allowed to trickle through a stationary fixed bed. With such a configuration, it is desirable to initiate the reaction with fresh catalyst at a moderate temperature which is of course raised as the catalyst ages, in order to maintain catalytic activity. The catalyst may be regenerated by contact at elevated temperature with hydrogen gas, for example, or by burning in air or other oxygen-containing gas.

A preliminary hydrotreating step to remove nitrogen and sulfur and to saturate aromatics to naphthenes without substantial boiling range conversion will usually improve catalyst performance in distillate dewaxing and permit lower temperatures, higher space velocities, lower pressures or combinations of these conditions to be employed.

The dewaxing process of the present invention may also be used to dewax various lube stocks such as light neutral, heavy neutral and bright stocks. Suitable conversion conditions for lube dewaxing include, e.g., a temperature of 230° to 400°C (450°F to 750°F), preferably from 260 to 371°C (500°F to 700°F); a pressure of from 790 to 13890 kPa (100 psig to 2000 psig), preferably from 1480 to 5620 kPa (200 psig to 800 psig); a liquid hourly space velocity of the feedstock (LHSV) of from 0.1 to 10, preferably from 0.2 to 5; and a ratio of hydrogen to the hydrocarbon feedstock (hydrogen circulation rate) of from 35 to 1420 $Nm^3/m^3$ (200 to 8000 SCF/bbl), preferably from 89 to 890 $Nm^3/m^3$ (500 to 5000).

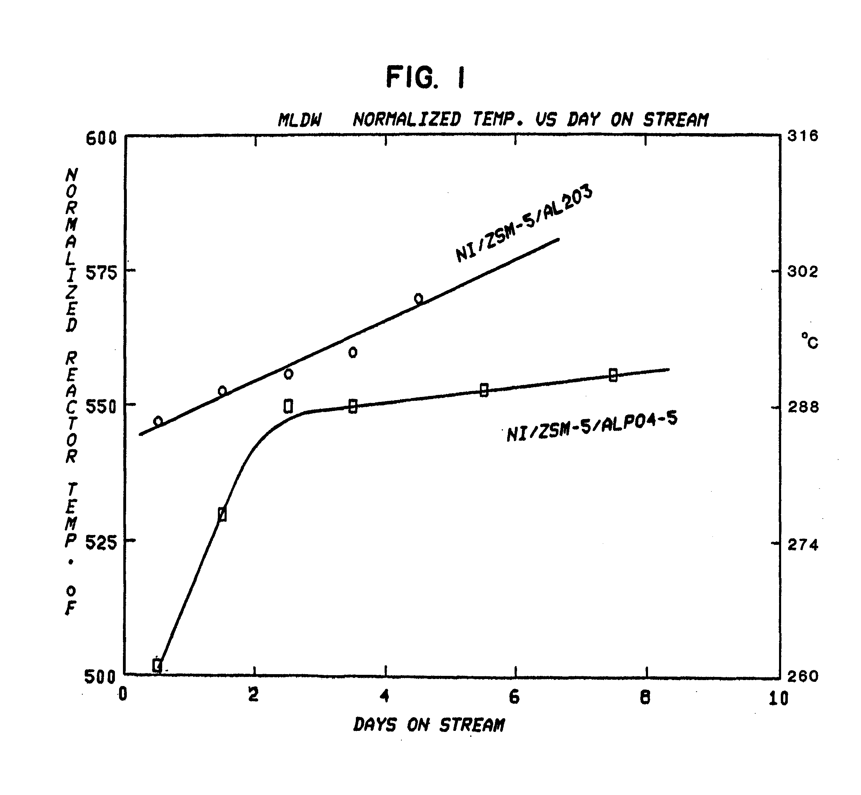

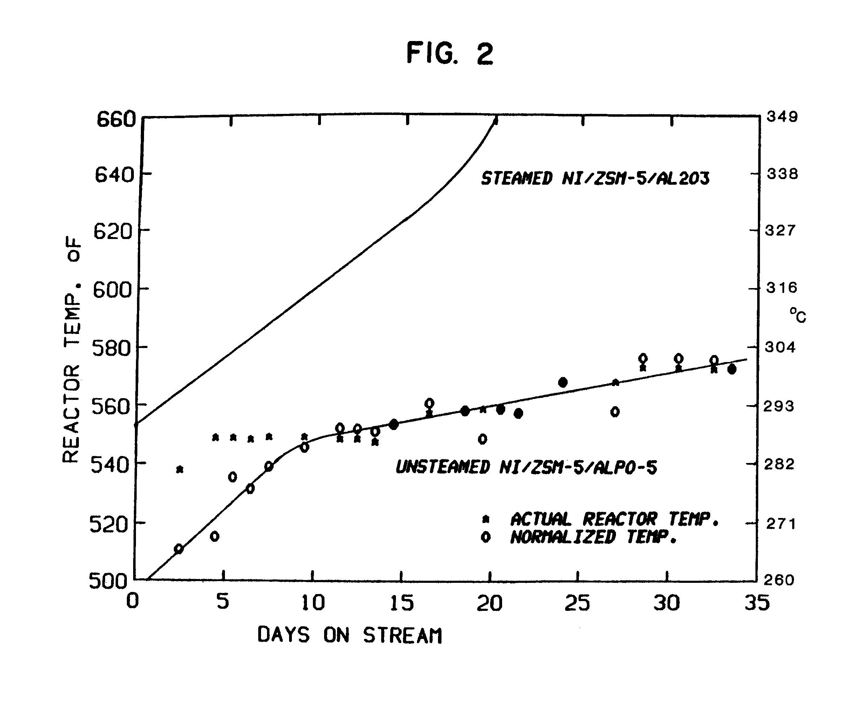

The invention will now be more particularly described with reference to the Examples and the accompanying drawings, in which Figures 1 and 2 are graphs illustrating the relative performance characteristics in lube dewaxing of a nickel-impregnated ZSM-5/aluminum phosphate catalyst compared to a nickel-impregnated ZSM-5/alumina catalyst.


## EXAMPLE 1

$AlPO_4$-5 was prepared in a manner similar to that disclosed in Ex. 5 of U.S. Patent 4,310,440 using 85% phosphoric acid, hydrated alumina (pseudo-boehmite phase), and triethylamine as template. Crystallization was effected in a teflon-lined autoclave at 195°C for 27 hours at autogeneous pressure. X-ray diffaction of the dried product indicated that $AlPO_4$-5 was the major phase.


## EXAMPLE 2

An as-synthesized ZSM-5 sample was converted into an ammonium form by initial air calcination for 3 hours at 540°C (1000°F) to remove organic directing agent followed by ammonium exchange in duplicate with 1.0 M ammonium chloride for 24 hours at room temperature.

## EXAMPLE 3

An as-synthesized zeolite Beta was dried at 110°C (230°F), then doubly exchanged with 1M ammonium nitrate for one hour at room temperature. The product dried at 110-121°C (230-250°F) overnight has the following composition, wt %:

| | |
|---|---|
| $SiO_2$ | 80.0 |
| $Al_2O_3$ | 2.7 |
| Na | .055 |
| C | 10.5 |
| N | 1.44 |
| Ash | 80.8 |

## EXAMPLE 4

A nickel-impregnated 65:35 composite of ZSM-5 and $AlPO_4$-5 was prepared as follows. A mixture of 79.9 g as-synthesized $AlPO_4$-5, prepared substantially in accordance with Example 1, and 133.1 g ammonium ZSM-5 prepared substantially in accordance with Example 2, was sized to 14/25 mesh. 159.9 g of this mixture was impregnated with a solution of 7.43 g of $Ni(NO_3)_2 \cdot 6H_2O$ in 73.6 g water (required for incipient wetness). The product was dried overnight at 121°C (250°F) and calcined at 540°C (1000°F) in air for one hour. The final composite had the following comoposition (wt %):

| | |
|---|---|
| $SiO_2$ | 62.7 |
| $Al_2O_3$ | 16.4 |
| $P_2O_5$ | 14.0 |
| Na | < 0.01 |
| Ni | 1.0 |
| Ash | 98.37 |

## EXAMPLE 5

A Pt-containing 65:35 composite of zeolite Beta and $AlPO_4$-5 was prepared as follows. 49.1 g of organic-ammonium zeolite Beta (80.8% ash), prepared substantially in accordance with Example 3, was mixed with 25 g as-synthesized $AlPO_4$-5 (87.6% ash), prepared substantially in accordance with Example 1, and with 51 g water. The mixture was dried for 2 days at room temperature and sized to 14/25 mesh. This dried composite was nitrogen precalcined and air calcined 3 hours at 540°C (1000°F) each, then steamed at 540°C (1000°F) for 10 hours and exchanged with platinum tetraamine nitrate solution to give 0.6% Pt on composite.

## EXAMPLE 6

The Ni-containing ZSM-5/AlPO$_4$-5 catalyst of Example 4 was presulfided with 2% H$_2$S at 370°C (700°F) until H$_2$S breakthrough. The resultant catalyst composition was then used to dewax a light neutral stock raffinate having the properties are shown in Table 1. Dewaxing was effected at 2859 kPa (400 psig) H$_2$, 1 LHSV and 445 Nm$^3$H$_2$/m$^3$ feed (2500 SCF H$_2$/bbl feed) in a continuous fixed bed microunit. The results are given in Table 2 and are compared in Figure 1 with the results obtained with a Ni/ZSM-5/Al$_2$O$_3$ catalyst composition. In Figure 1, the reaction temperature values are adjusted so as to correct for pour point variations in the product, a 2°F (1.1°C) variation in pour point corresponding to a 1°F (0.55°C) variation in reactor temperature.

## TABLE 1

### PROPERTIES OF LIGHT NEUTRAL STOCK RAFFINATE

| | |
|---|---|
| Specific Gravity | 0.8774 |
| API, ° 29.8 | |
| | |
| Pour Point, °F(°C) | 85(29) |
| Cloud Point, °F(°C) | >120(49) |
| | |
| Kinematic Viscosity, | |
| cs @ 40°C | 31.61 |
| Kinematic Viscosity, | |
| cs @ 100°C | 5.341 |
| Sulfur, wt % | 0.76 |
| Basic Nitrogen, ppm | 45 |
| Hydrogen, wt % | 13.70 |
| Aniline Point | 212.50 |
| Total Acid Number | 0.170 |
| Color ASTM Oil | Less than 1 |

Sim. Distillation, ASTM D2887

| | | |
|---|---|---|
| 10% | 744.9°F | (396.1°C) |
| 30% | 794.8°F | (423.8°C) |
| 50% | 829.6°F | (498.7°C) |
| 70% | 865°F | (463°C) |
| 90% | 906.4°F | (485.8°C) |

TABLE 2
LUBE DEWAXING RUN DATA

| | Feed Charge | 540(282) | 550(288) | 540(282) | 545(285) | 550(288) | 558(292) |
|---|---|---|---|---|---|---|---|
| Temperature, °F(°C) | | 540(282) | 550(288) | 540(282) | 545(285) | 550(288) | 558(292) |
| Time On Stream, Days | | 0.5 | 1.5 | 2.5 | 3.5 | 5.5 | 7.5 |
| LHSV | | 1.03 | 1.00 | 1.01 | 0.99 | 0.99 | 0.72 |
| Material Balance, % | | – | 97.0 | 97.3 | 95.6 | 97.9 | 96.4 |
| Yields, Wt. % | | | | | | | |
| $C_1 + C_2$ | | | 0.2 | 0 | 0 | 0 | 0.1 |
| $C_3$ | Feed | | 7.0 | 3.5 | 4.2 | 3.9 | 4.4 |
| $C_4$ | Charge | | 6.9 | 4.1 | 4.5 | 4.3 | 5.2 |
| $C_5$ | | | 2.2 | 1.4 | 1.5 | 1.7 | 2.8 |
| $C_6$-650°F(340°C) | | | 9.5 | 10.3 | 9.8 | 8.9 | 8.5 |
| 343°C+(650°F+) Lube | 100 | | 74.2 | 80.7 | 80.0 | 81.2 | 79.0 |
| Specific Gravity | 0.8774 | 0.8961 | 0.8981 | 0.8828 | 0.8834 | 0.8833 | 0.8856 |
| API, ° | 29.8 | 26.4 | 26.1 | 28.8 | 28.7 | 28.7 | 28.3 |
| Pour Point, °F(°C) | 85(29) | −55(−48) | −20(−29) | 40(4) | 30(−1) | 25(−4) | 15(−9) |
| Cloud Point, °F(°C) | > 120(49) | −22(−30) | −18(−28) | 50(10) | 44(7) | 50(10) | 26(−3) |
| KV @ 40°C | | 53.21 | 48.75 | 41.75 | 42.60 | 42.42 | 44.64 |
| KV @ 100°C | 5.341 | 6.791 | 6.655 | 6.289 | 6.339 | 6.327 | 6.460 |
| Viscosity Index | | 74.4 | 84.7 | 96.7 | 95.2 | 95.5 | 92 |
| Sulfur, Wt. % | 0.76 | 1.04 | 0.99 | 0.91 | 0.93 | 0.86 | 0.92 |
| Basic Nitrogen, ppm | 45 | 32 | 38 | 34 | 36 | 35 | 40 |
| Nitrogen, ppm | | 36 | 40 | 40 | 42 | 36 | 40 |
| Hydrogen, Wt. % | 13.7 | 13.29 | 13.64 | 13.56 | 13.75 | 13.63 | 13.51 |
| CCR, Wt. % | | 0.01 | 0.01 | <0.01 | < 0.01 | < 0.01 | 0.01 |
| Bromine No. | | 4.0 | 2.5 | 2.3 | 1.8 | 2.0 | 1.5 |
| ASTM Color | < 1.0 | < 2.0 | < 1.5 | < 1.5 | < 1.5 | < 2.0 | < 1.5 |

The run was started at 282°C (540°F). The catalyst was very active on the first day on stream. The correlated start-of-cycle temperature for this catalyst was 261°C (502°F), which is at least 22°C (40°F) lower than unsteamed $Ni/ZSM-5/Al_2O_3$. After 3 days on stream, the catalyst lined out approximately 288°C (550°F) and had a low aging rate of 0.6°C (1°F) per day (Figure 1). By contrast, a $Ni/ZSM-5/Al_2O_3$ lube dewaxing catalyst had a start-of-cycle temperature of 285°C (545°F) and an aging rate of 3°C (5°F) per day. Unsteamed $Ni/ZSM-5/Al_2O_3$ did not line out below 357°C (675°F), which is normally considered as the end-of-cycle temperature. Thus, the $ZSM-5/AlPO_4-5$ catalyst showed improved activity and stability over the $ZSM-5/Al_2O_3$ catalyst.

### EXAMPLE 7

Using a fresh batch of an Ni-containing $ZSM-5/AlPO_4-5$ catalyst prepared in accordance with Example 4, said catalyst being presulfided in the manner of Example 6, the dewaxing runs of Example 6 were repeated except that a heavy neutral stock raffinate was substituted for the light neutral stock raffinate of Example 6. The results are shown in Table 3 and are compared in Figure 2 with the results obtained with a steamed $Ni/ZSM-5/Al_2O_3$ catalyst composition. In Figure 2, the reaction temperature values are shown as actually measured and as adjusted so as to correct for pour point variations in the product, a 1°F (0.55°C) variation in reactor temperature resulting in a 1.5°F (0.83°C) variation in the product pour point using the feed concerned.

The $Ni/ZSM-5/AlPO_4-5$ catalyst had a start-of-cycle temperature of about 254°C (490°F) and an initial aging rate of 3°C (6°F/day), when the reactor temperatures were corrected to -7°C (20°F) pour point. However, the actual pour points for the first several days were significantly below -7°C (20°F). After 11 days on stream, the catalyst appeared to have lined-out at 291°C (555°F) with an aging rate of about 0.6°C (1°F) per day.

TABLE 3
DEWAXING RUN DATA

| | Feed Charge | | | | | | | |
|---|---|---|---|---|---|---|---|---|
| Temperature, °F(°C) | | 538.7 (281.5) | 549.7 (287.6) | 549.7 (287.6) | 549.0 (287.2) | 549.8 (287.7) | 549.8 (287.7) | 549.5 (287.5) |
| Time On Stream, Days | | 2.5 | 4.5 | 5.5 | 6.5 | 7.5 | 9.5 | 11.5 |
| LHSV | | 0.88 | 0.86 | 1.18 | 1.00 | 1.07 | 1.11 | 1.06 |
| Material Balance, % | | 98.1 | 100.3 | 99.2 | 99.9 | 98.9 | 97.1 | 98.8 |
| **Yields, Wt. %** | | | | | | | | |
| $C_1 + C_2$ | | 0.1 | 0.2 | 0.2 | 0.2 | 0.2 | 0.2 | 0.2 |
| $C_3$ | | 3.9 | 6.3 | 5.1 | 6.2 | 5.3 | 4.1 | 4.1 |
| $C_4$ | Feed | 8.8 | 9.5 | 7.6 | 9.0 | 8.0 | 7.0 | 7.0 |
| $C_5$ | Charge | 4.6 | 4.8 | 2.4 | 3.5 | 3.0 | 3.4 | 3.4 |
| $C_6$-650°F(340°C) | | 3.2 | 4.0 | 4.7 | 3.1 | 3.4 | 3.7 | 3.3 |
| 343°C+(650°F+) Lube | 100 | 79.4 | 75.2 | 80.0 | 78.0 | 80.1 | 81.6 | 82.0 |
| Specific Gravity | 0.8927 | 0.9008 | .8981 | .8981 | .8992 | .8986 | .8980 | .8974 |
| API, ° | 27.0 | 25.6 | 26.1 | 26.1 | 25.9 | 26.0 | 26.1 | 26.2 |
| Pour Point, °F(°C) | 120(49) | -20(-29) | -30(-34) | 0(-18) | -5(-21) | 5(-16) | 15(-9) | 25(-4) |
| Cloud Point, °F(°C) | >120(49) | -18(-28) | -28(-33) | 6(-14) | 4(-16) | 14(-10) | 20(-7) | 30(-1) |
| KV @ 100°F(38°) | | 156.2 | 159.7 | 152.3 | 150.8 | 150.9 | 151.8 | 149.7 |
| KV @ 210°F(99°C) | | 13.35 | 13.41 | 13.23 | 13.13 | 13.29 | 13.31 | 13.27 |
| KV @ 40°C | | 137.3 | 140.2 | 134.0 | 132.7 | 132.9 | 133.6 | 131.9 |
| KV @ 100°C | 11.46 | 12.96 | 13.01 | 12.84 | 12.75 | 12.90 | 12.92 | 12.88 |
| SUS @ 100°F(38°C) | | 724 | 740 | 706 | 699 | 699 | 703 | 694 |
| SUS @ 210°F (99°C) | | 71.5 | 71.7 | 71 | 70.7 | 71.3 | 71.3 | 71.2 |
| Viscosity Index | | 85.1 | 83.2 | 86.3 | 86.2 | 88.2 | 87.9 | 88.9 |
| Sulfur, Wt. % | 0.98 | 1.20 | 1.19 | 1.17 | 1.17 | 1.18 | 1.11 | 1.13 |
| Basic Nitrogen, ppm | 61 | 74 | 73 | 73 | 72 | 71 | 73 | 72 |
| Nitrogen, ppm | 61 | 83 | 69 | 74 | 61 | 80 | 46 | 120 |
| Hydrogen, Wt. % | 13.79 | 13.24 | 13.40 | 13.42 | 13.28 | 13.22 | 13.32 | 13.41 |
| CCR, Wt. % | 0.08 | 0.09 | 0.09 | 0.09 | 0.11 | 0.08 | 0.08 | 0.09 |
| Bromine No. | 1.0 | 3.6 | 4.0 | 3.5 | 3.6 | 3.0 | 2.5 | 2.5 |
| ASTM Color | 4.5 | 2.5 | < 3.0 | < 3.0 | < 3.5 | <3.0 | < 3.5 | 3.0 |

TABLE 3
DEWAXING RUN DATA

| | | | | | | | |
|---|---|---|---|---|---|---|---|
| Temperature, °F(°C) | 548.3 | 548.4 | 554.2 | 558.0 | 559.0 | 559.4 | 559.4 |
| | (286.8) | (286.9) | (290.1) | (292.2) | (292.8) | (293.0) | (293.0) |
| Time On Stream, Days | 12.5 | 13.5 | 14.5 | 16.5 | 18.5 | 19.5 | 20.5 |
| LHSV | 0.97 | 1.06 | 0.98 | 1.21 | 1.04 | 1.11 | 0.98 |
| Material Balance, % | 100.5 | 99.8 | 97.9 | 97.1 | 103.0 | 102.6 | 100.0 |
| | | | | | | | |
| Yields, Wt. % | | | | | | | |
| $C_1 + C_2$ | 0.2 | 0.1 | 0.2 | 0.2 | 0.1 | 0.1 | 0.2 |
| $C_3$ | 4.2 | 4.0 | 3.8 | 3.1 | 3.0 | 4.3 | 3.8 |
| $C_4$ | 7.6 | 7.3 | 6.9 | 5.4 | 5.8 | 7.3 | 7.4 |
| $C_5$ | 3.8 | 3.6 | 3.3 | 2.9 | 2.9 | 4.4 | 3.1 |
| $C_6$-650°F | 3.1 | 3.0 | 3.0 | 4.9 | 6.6 | 3.0 | 3.4 |
| (650°F+) Lube | 81.1 | 82.0 | 82.8 | 83.5 | 81.6 | 80.9 | 82.1 |
| | | | | | | | |
| Specific Gravity | 0.8981 | 0.8973 | 0.8983 | 0.8973 | 0.8979 | 0.8974 | 0.8976 |
| API, ° | 26.1 | 26.2 | 26.0 | 26.2 | 26.1 | 26.2 | 26.1 |
| | | | | | | | |
| Pour Point, °F(°C) | 25(-4) | 25(-4) | 20(-7) | 25(-4) | 20(-7) | 5(-16) | 20(-7) |
| Cloud Point, °F(°C) | 38(3) | 38(3) | 28(-2) | 42(6) | 32(0) | 38(3) | 30(-1) |
| | | | | | | | |
| KV @ 100°F(38°) | 150.2 | 148.5 | 151.5 | 147.8 | 149.9 | 147.7 | 148.4 |
| KV @ 210°F(99°C) | 13.30 | 13.27 | 13.33 | 13.22 | 13.28 | 13.21 | 13.22 |
| KV @ 40°C | 132.3 | 130.9 | 133.4 | 130.3 | 132.0 | 130.2 | 130.8 |
| KV @ 100°C | 12.91 | 12.89 | 12.94 | 12.84 | 12.89 | 12.83 | 12.84 |
| SUS @ 100°F(38°C) | 696 | 688 | 702 | 685 | 694 | 684 | 688 |
| SUS @ 210°F (99°C) | 71.3 | 71.2 | 71.4 | 71 | 71.2 | 71 | 71 |
| | | | | | | | |
| Viscosity Index | 88.9 | 89.9 | 88.4 | 89.8 | 88.9 | 89.7 | 89.3 |
| Sulfur, Wt. % | 1.13 | - | 1.14 | 1.12 | 1.11 | 1.11 | 1.12 |
| Basic Nitrogen, ppm | 68 | 66 | 70 | 69 | 69 | 69 | 70 |
| Nitrogen, ppm | 89 | 100 | 77 | 85 | 74 | 80 | 72 |
| Hydrogen, Wt. % | 13.32 | 13.50 | 13.42 | 13.30 | 13.50 | 13.25 | 13.40 |
| CCR, Wt. % | 0.12 | 0.09 | 0.09 | 0.07 | 0.12 | 0.09 | 0.11 |
| | | | | | | | |
| Bromine No. | 2.4 | 1.9 | 2.6 | 2.9 | 3.2 | 2.6 | 2.5 |
| ASTM Color | <3.5 | <3.5 | <3.5 | 3.0 | 3.0 | <3.5 | 3.0 |

| | | | | | | | |
|---|---|---|---|---|---|---|---|
| Temperature, °F(°C) | 558.2 (292.3) | 568.8 (298.2) | 568.7 (298.2) | 573.7 (300.9) | 573.6 (300.9) | 573.1 (300.6) | 573.5 (300.8) |
| Time On Stream, Days | 21.5 | 24.0 | 27.0 | 28.5 | 30.5 | 32.5 | 33.5 |
| LHSV | 0.92 | 1.05 | 0.85 | 1.00 | 0.99 | 0.92 | 0.89 |
| Material Balance, % | 99.9 | 98.0 | 99.0 | 98.5 | 98.5 | 97.7 | 98.9 |
| **Yields, Wt. %** | | | | | | | |
| $C_1 + C_2$ | 0.2 | 0.2 | 0.3 | 0.2 | 0.3 | 0.3 | 0.3 |
| $C_3$ | 3.9 | 3.5 | 4.2 | 3.9 | 4.0 | 3.6 | 3.8 |
| $C_4$ | 6.1 | 6.3 | 5.8 | 5.7 | 5.3 | 5.0 | 5.2 |
| $C_5$ | 3.8 | 3.5 | 3.5 | 3.6 | 3.4 | 2.9 | 3.3 |
| $C_6$-650°F(343°C) | 4.0 | 3.5 | 4.6 | 4.4 | 3.5 | 4.2 | 4.2 |
| (343°C+)(650°F+) Lube | 82.0 | 83.0 | 81.9 | 82.2 | 83.5 | 84.0 | 83.2 |
| Specific Gravity | 0.8979 | 0.8981 | 0.8988 | 0.8974 | 0.8980 | 0.8976 | 0.8975 |
| API, ° | 26.1 | 26.1 | 26.0 | 26.2 | 26.1 | 26.4 | 26.2 |
| Pour Point, °F(°C) | 20(-7) | 20(-7) | 5(-16) | 25(-4) | 25(-4) | 25(-4) | 20(-7) |
| Cloud Point, °F(°C) | 34(1) | 28(-2) | 14(-10) | 40(4) | 30(-1) | 36(2) | 38(3) |
| KV @ 100°F(38°) | 149.6 | 149.3 | 150.7 | 147.6 | 148.4 | 148.3 | 146.1 |
| KV @ 210°F(99°C) | 13.26 | 13.23 | 13.23 | 13.20 | 13.25 | 13.24 | 13.16 |
| KV @ 40°C | 131.8 | 131.5 | 132.7 | 130.1 | 131.6 | 130.7 | 128.8 |
| KV @ 100°C | 12.87 | 12.85 | 12.84 | 12.82 | 12.86 | 12.87 | 12.78 |
| SUS @ 100°F(38°C) | 693 | 692 | 698 | 684 | 692 | 687 | 677 |
| SUS @ 210°F (99°C) | 71.1 | 71.1 | 71 | 70.9 | 71.1 | 71.1 | 70.8 |
| Viscosity Index | 88.8 | 88.8 | 87.6 | 89.7 | 88.9 | 89.8 | 90.3 |
| Sulfur, Wt. % | 1.12 | 1.11 | 1.14 | 1.14 | 1.12 | 1.23 | 1.23 |
| Basic Nitrogen, ppm | 67 | 67 | | 67 | 67 | 69 | 69 |
| Nitrogen, ppm | 97 | 83 | 85 | 91 | 94 | 93 | 100 |
| Hydrogen, Wt. % | 13.43 | 13.33 | 13.50 | 13.36 | 13.58 | 14.36 | 13.59 |
| CCR, Wt. % | 0.08 | 0.08 | 0.12 | 0.11 | 0.14 | 0.09 | 0.08 |
| Bromine No. | 2.9 | 3.0 | 4.9 | 4.1 | 4.1 | 4.2 | 4.5 |
| ASTM Color | 3.0 | 3.0 | < 3.5 | < 3.5 | < 3.5 | < 3.0 | < 3.5 |

F-3167            --18--

## EXAMPLE 8

After 34 days on stream with the heavy neutral stock of Example 7 the feed was switched to Minas LV gas oil having the properties listed in Table 4.

### Table 4
### Properties of Minas LV Gas Oil

| | |
|---|---|
| Gravity, °API | 35.1 |
| Pour Point, °F(°C) | 95 (35) |
| Cloud Point, °F(°C) | > 120 (49) |
| KV, cs @ 40°C | 8.671 |
| KV, cs @ 100°C | 2.534 |
| Sulfur, wt % | 0.068 |
| Nitrogen, ppm | 180 |
| Basic Nitrogen, ppm | 74 |
| Hydrogen, wt % | 13.96 |
| Aniline Point | 202 |
| Bromine No. | 1.5 |
| Carbon Residue by MCRT, % | 0.02 |
| ASTM Color | L5.0 |

Simulated Distillation, ASTM D2887

| | |
|---|---|
| 0.5% Off °F (°C) | 259.2 (126.2) |
| 5% | 520.8 (271.6) |
| 10% | 546.2 (285.7) |
| 20% | 597.9 (314.4) |
| 30% | 635.8 (335.4) |
| 40% | 666.9 (352.7) |
| 50% | 694.2 (367.9) |
| 60% | 722.4 (383.6) |
| 70% | 752.4 (400.2) |
| 80% | 789.8 (421.0) |
| 90% | 852.4 (461.3) |
| 95% | 936.6 (502.6) |
| 99.5% | 1106 (596.7) |

The following table compares the dewaxing results of Minas LV gas oil over $Ni/ZSM-5/AlPO_4-5$ and $Ni/ZSM-5/Al_2O_3$:

| Catalyst | $Ni/ZSM-5/$ $AlPO_4-5$ | $Ni/ZSM-5/$ $Al_2O_3$ |
|---|---|---|
| Catalyst Age, Days on Stream | 38.5 | 34.2 |
| Average reactor Temp., °F(°C) | 684(362) | 721(382.8) |
| LHSV | 1.14 | 1.01 |
| Reactor Pressure, Psig $H_2$ (kPa) | 400(2859) | 400(2859) |
| Hydrogen Circulation, SCF/bbl | 2000 | 2000 |
| $(Nm_3/m^3)$ | 356 | 356 |
| 330°F+ (166°C+)Pour Point, °F(°C) | 25(-4) | 20(-7) |
| Yields, wt% | | |
| $C_1-C_2$ | 0.5 | 0.4 |
| $C_3$ | 4.0 | 3.0 |
| $C_4$ | 7.4 | 6.6 |
| $C_5$ | 7.0 | 7.0 |
| $C_6$-330°F($C_6$ - 166°C) | 15.9 | 17.9 |
| 330°F+(166°C+) | 65.2 | 65.1 |

Thus the $ZSM-5/AlPO_4-5$ catalyst had significantly improved activity but equivalent selectivity, as compared with the $ZSM-5/Al_2O_3$ catalyst.

WHAT IS CLAIMED IS:

1. A process for dewaxing a hydrocarbon feedstock, said process comprising contacting said feedstock under dewaxing conditions with a catalyst composition comprising (i) a catalytically active porous crystalline aluminosilicate and (ii) a crystalline aluminum phosphate.

2. A process according to claim 1, wherein said aluminosilicate has a silica to alumina mole ratio from 12 to 500.

3. A process according to claim 1 or claim 2 wherein said aluminosilicate is a zeolite having a Constraint Index less than 12.

4. A process according to claim 1 or claim 2 wherein said zeolite is selected from ZSM-5, ZSM-11, ZSM-12, ZSM-23, ZSM-38, ZSM-48, mordenite, dealuminized Y, REY and zeolite beta.

5. A process according to any preceding claim, wherein said aluminum phosphate has a microporous framework structure in which the pores are uniform and have a nominal diameter within the range of 3 to 10 Angstroms, and has an intracrystalline adsorption capacity for water at 4.6 torr and 24°C of at least 3.5 weight percent.

6. A process according to any preceding claim, which is a lube dewaxing process, wherein a lube stock is contacted with said catalyst composition under conditions including a temperature of 230 to 400°C (450° to about 750°F), a pressure of from 790 to 13890 kPa (100 to 2000 psig), a liquid hourly space velocity of th feedstock of from 0.1 to 10, and a ratio of hydrogen to the hydrocarbon feedstock of from 35 to 1420 $Nm^3/m^3$ (200 to 8000 SCF/bbl).

7. A process according to any one of claims 1 to 5, which is a distillable dewaxing process, wherein a hydrocarbon distillate feed is contacted with said catalyst composition under conditions including a temperature of 230 to 500°C (450 to 930°F), a pressure of 790 to 20790 kPa (100-3000 psig) and a liquid hourly space velocity of 0.1 to 20.

8. A catalyst composition for use in the process of claim 1 comprising (i) a catalytically active porous crystalline aluminosilicate zeolite having a Constraint Index of 1 to 12 and a silica to alumina mole ratio of at least 12 and (ii) a crystalline aluminum phosphate.

9. A catalyst composition as claimed in claim 8 wherein said aluminum phosphate has a microporous framework structure in which the pores are uniform and have a nominal diameter within the range of 3 to 10 Angstroms and has an intracrystalline adsorption capacity for water at 4.6 torr and 24°C of at least 3.5 weight percent.

10. A catalyst composition as claimed in Claim 8 or Claim 9, wherein said zeolite is selected from ZSM-5, ZSM-11, ZSM-12, ZSM-23, ZSM-38, ZSM-48, and zeolite beta .

FIG. I

MLDW   NORMALIZED TEMP. VS DAY ON STREAM

FIG. 2

0189243